# DEMANDE DE BREVET EUROPEEN

(11) **EP 1 493 685 A1**
(43) Date de publication de la demande: **05.01.2005**
(21) Numéro de dépôt: 04291202.2
(22) Date de dépôt: 11.05.2004
(51) Int. Cl.: B65D 81/34, B65D 30/06, A23L 1/01

(54) **Emballage pour crevettes et procédé de réalisation**

(30) Priorité: 02.07.2003 FR 0308036
(71) Demandeur: Unima Europe, 98000 Monaco (MC)
(72) Inventeur: Mens, Frédéric, 56100 Lorient (FR)
(74) Mandataire: Fruchard, Guy

(57) **Abrégé**

Selon l'invention, des crevettes sont mises en lots, disposées dans un emballage souple ajouré ayant volume utile supérieur au volume des crevettes conditionnées, le volume utile étant suffisant pour permettre un déplacement aisé des crevettes les unes par rapport aux autres lorsque l'emballage souple est mis à plat sur un support rigide (7). Le procédé de réalisation d'étapes de traitement de traçabilité consiste à sceller l'emballage souple et à effectuer les étapes de traitement sans desceller l'emballage souple.

## Description

La présente invention concerne un lot de crevettes et un procédé de réalisation d'étapes de traitement avec traçabilité de crevettes, notamment, bien que non exclusivement en relation avec la congélation et la cuisson de crevettes.

### ARRIERE PLAN DE L'INVENTION

On sait qu'en raison du volume sans cesse croissant des denrées alimentaires qui sont soumises à un traitement, notamment une congélation et/ou une cuisson, il est nécessaire d'avoir une traçabilité des traitements effectués sur chacune des denrées alimentaires, de préférence depuis le lieu de production jusqu'au lieu de consommation. Or, dans l'état actuel des procédés de traitement des denrées alimentaires, en particulier lorsqu'un produit alimentaire est divisé en pièces individuelles conditionnées selon des lots, il est fréquent que la traçabilité ne puisse pas être obtenue en raison des différentes manipulations réalisées sur les denrées, en particulier en raison du changement de conditionnement.

A titre d'exemple, lorsque des crevettes doivent être transportées, elles sont généralement congelées sur le site de production puis réparties en lots dans des caissettes qui sont identifiées et qui font l'objet d'un marquage donnant en particulier une date limite de décongélation, puis les crevettes sont transportées vers un lieu de cuisson qui est généralement à proximité du lieu de consommation. Pour la cuisson, les crevettes sont tout d'abord extraites des caissettes pour être décongelées et cuites, puis remises dans de nouvelles caissettes, le cas échéant après une deuxième congélation. Les nouvelles caissettes sont également identifiées avec un numéro de lot et une date limite de consommation. Il ressort immédiatement de cette procédure que les crevettes reconditionnées après cuisson peuvent provenir de différents lots réalisés lors du premier conditionnement, de sorte que si une anomalie est détectée sur un lot après cuisson, et qu'il s'avère que cette anomalie provient d'une défaillance avant cuisson, il est nécessaire d'éliminer tous les lots susceptibles de contenir des crevettes provenant de lots initiaux ayant subi la défaillance.

Pour obtenir une traçabilité réelle depuis le lieu de production jusqu'au lieu de consommation, il est donc nécessaire que les crevettes soient maintenues dans un même conditionnement pendant toutes les étapes de traitement successives.

Par ailleurs, pour certaines étapes de traitement, notamment la congélation et la cuisson, il est nécessaire que les crevettes soient disposées selon une couche uniforme afin que le traitement d'un lot soit réalisé de façon homogène. Il a donc été envisagé de disposer les crevettes dans des caissettes ayant une structure adaptée pour permettre les différents traitements. Toutefois des caissettes adaptées pour permettre à la fois une congélation et une cuisson sont très onéreuses. Il n'est donc pas envisageable de commercialiser les crevettes dans de telles caissettes. Il a également été envisagé de disposer les crevettes dans des filets ayant un volume utile sensiblement égal au volume de crevettes conditionnées dans le filet ainsi que cela est connu pour d'autres produits alimentaires notamment par les documents FR-A-1 298 271 et JP 61-190465. Dans ce cas toutefois, le filet tend à prendre la forme d'une boule lors de l'introduction des crevettes et conserve ultérieurement cette forme de boule de sorte que lors des traitements successifs de congélation ou de cuisson le résultat n'est pas homogène et il peut en résulter des anomalies telles qu'une non congélation des crevettes disposées au centre du filet ou une non cuisson de ces mêmes crevettes lors de la cuisson, ou encore une cuisson trop forte des crevettes disposées à la périphérie du filet.

### OBJET DE L'INVENTION

Un but de l'invention est de proposer une forme de conditionnement de crevettes permettant tout à la fois de réaliser l'ensemble des étapes de traitement de façon optimale et d'obtenir une traçabilité depuis le lieu de production jusqu'au lieu de consommation.

### BREVE DESCRIPTION DE L'INVENTION

Selon l'invention, on propose de réaliser un lot de crevettes disposées dans un emballage souple ajouré, dans lequel l'emballage souple a un volume utile supérieur au volume des crevettes, le volume utile étant suffisant pour permettre un déplacement aisé des crevettes les unes par rapport aux autres lorsque l'emballage souple est mis à plat sur un support rigide.

Ainsi, lors du conditionnement initial, le lot prend une forme bombée mais contrairement aux lots habituels dont les pièces sont serrées les unes contre les autres par l'emballage souple, il est possible avec le lot selon l'invention de répartir les pièces selon une couche ayant une épaisseur sensiblement uniforme, en particulier lorsque le lot est disposé dans une caissette ou un panier rigide.

De préférence, l'emballage souple a un volume utile égal au double du volume des crevettes.

L'invention concerne également un procédé de réalisation d'étapes de traitement avec traçabilité de crevettes, comportant les étapes de réaliser des lots de crevettes en disposant les crevettes formant un lot dans un emballage souple ajouré ayant un volume utile supérieur au volume des crevettes, le volume utile étant suffisant pour permettre un déplacement aisé des crevettes les unes par rapport aux autres, de sceller l'emballage souple et d'effectuer les étapes de traitement en disposant le lot de crevettes sur un support rigide de façon que les crevettes soient étalées selon une couche ayant une épaisseur sensiblement constante sans qu'il soit nécessaire de desceller l'emballage souple.

### BREVE DESCRIPTION DES DESSINS

D'autres caractéristiques et avantages de l'invention apparaîtront à la lecture de la description qui suit d'un mode de réalisation et de mise en oeuvre particulier de l'invention, en référence aux figures ci-jointes parmi lesquelles :
- la figure 1 est une vue en perspective d'un emballage souple conforme à l'invention,
- la figure 2 est une vue en coupe selon la ligne II-II de la figure 1 d'un lot de crevettes conditionné selon l'invention,
- la figure 3 est une vue analogue à celle de la figure 2 d'un lot de crevettes disposé dans une caissette ajourée rigide.

### DESCRIPTION DETAILLEE DE L'INVENTION

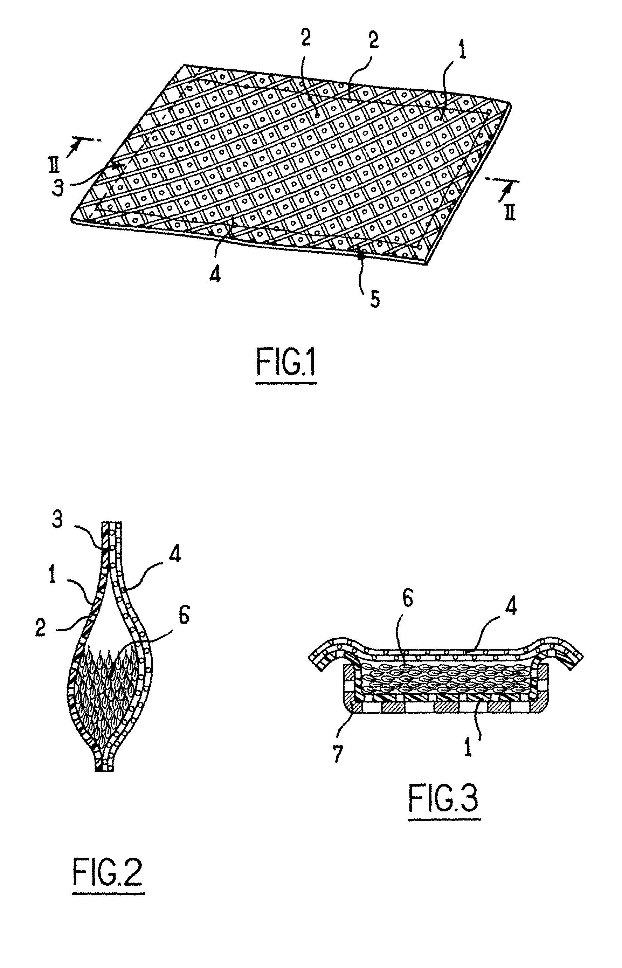

En référence à la figure 1, selon le mode de réalisation préféré illustré, l'emballage souple 1 est réalisé à partir de deux matériaux en feuilles. La première feuille 1 est réalisée à partir d'un film en matière plastique comportant des perforations 2 réparties sur sa surface à l'exception d'une bande 3 délimitée par des tirets sur la figure. La seconde feuille 4 est réalisée à partir d'un filet comportant des mailles qui, pour le conditionnement de crevettes, ont une dimension comprise entre un et quinze millimètres en fonction de la taille des crevettes et de préférence de six ou sept millimètres pour des grosses crevettes. La feuille 1 et la feuille 4 sont associées l'une à l'autre sur trois bords, par exemple par soudage selon une bande 5 délimitée par un trait fin sur la figure.

Lors d'un traitement de crevettes, un lot de crevettes fraîches 6 ayant un volume sensiblement égal à la moitié du volume utile de l'emballage souple décrit ci-dessus, est introduit dans cet emballage qui prend alors une forme galbée comme illustré par la figure 2. L'emballage est scellé le long de la bande 3, par exemple par soudage, et des inscriptions d'identification du lot sont imprimées sur la face de la bande 3 formée par le film 1 ou à un autre endroit de l'emballage. Ce marquage peut également être effectué avant d'introduire les crevettes dans l'emballage.

Pour assurer une congélation des crevettes, un lot de crevettes est disposé à plat sur un support rigide, par exemple une caissette métallique ajourée 7 comme illustré par la figure 3, et les crevettes sont déplacées soit manuellement, soit en soumettant la caissette 7 à une vibration, pour répartir les crevettes selon une couche d'épaisseur sensiblement uniforme de l'ordre de cinq centimètres.

A titre d'exemple, pour le conditionnement d'un lot de crevettes de deux kilos, on peut utiliser un sac rectangulaire ayant une largeur de trente centimètres et une longueur de trente six centimètres.

Les crevettes ainsi disposées sont par exemple introduites dans un bain de saumure à - 20°C. A la sortie du bain, le lot de crevettes est égoutté puis passé dans un courant d'air froid pour achever la congélation tout en éliminant les restes de saumure. A ce propos, on notera que du fait de la congélation, les crevettes 6 adhèrent légèrement les unes aux autres, de sorte qu'il est possible de sortir le lot de crevettes de la caissette 7 tout en conservant la forme qu'il avait prise pendant la congélation. Les lots ainsi réalisés sont de préférence mis deux par deux dans un carton, plusieurs cartons pouvant être regroupés dans un suremballage en vue du transport.

Sur le lieu de cuisson, les lots sont extraits des cartons et disposés à nouveau dans une caissette ajourée ou disposés sur un tapis de transport en continu. Une décongélation est effectuée par un liquide à une température de l'ordre de 15°C à 40°C et les crevettes ainsi décongelées sont soumises à une précuisson à 70°C, ce qui permet de maintenir sous forme liquide des protéines qui s'échappent des crevettes et d'évacuer celles-ci dans l'eau de précuisson. Pour achever la cuisson les crevettes sont ensuite cuites à une température de 90°C à 100°C à laquelle les protéines restantes coagulent. Pour éliminer la graisse extraite des crevettes et éviter que celle-ci se dépose sur l'emballage souple, la précuisson et la cuisson sont de préférence effectuées dans des cuves à débordement. Pendant la précuisson et/ou la cuisson on peut également soumettre les crevettes à une agitation douce, par exemple en créant des turbulences dans l'eau de cuisson, afin d'éliminer les résidus.

Après cuisson, les crevettes sont soumises à un pré-refroidissement pour arrêter la cuisson puis, le cas échéant, soumises à un refroidissement ou une nouvelle congélation. A l'issue du traitement, les lots sont marqués individuellement avec les indications concernant les traitements effectués ainsi qu'éventuellement la date et le lieu de ces traitements, et la date limite de conservation. De préférence, les lots sont ensuite disposés dans des emballages isothermes en vue de leur acheminement vers le lieu de consommation.

Bien entendu, l'invention n'est pas limitée au mode de réalisation et de mise en oeuvre décrits ci-dessus et on peut y apporter des variantes de réalisation sans sortir du cadre de l'invention tel que défini par les revendications.

En particulier, les emballages souples peuvent être constitués de deux feuilles en forme de filet soudées l'une à l'autre ou par des filets réalisés en une seule pièce, les indications étant alors étant alors portées sur une bande rapportée au moment de la fermeture du filet, ou de toute autre manière permettant d'identifier les éléments de traçabilité.

L'invention s'applique non seulement aux crevettes comme décrit ci-dessus, mais également à tout lot de crevettes présentant les mêmes problèmes de faible mobilité les unes par rapport aux autres dès qu'elles sont serrées les unes contre les autres par un emballage ajusté. Les dimensions données pourront être adaptées en fonction de la dimension des crevettes. Pour des crevettes, l'épaisseur de la couche lors des traitements pourra être comprise entre deux et dix centimètres en fonction des techniques utilisées tant pour la congélation que pour la cuisson.

Les étapes de traitement pourront être multiples et effectuées dans un ordre quelconque. En particulier la congélation pourra être effectuée avant le conditionnement initial.

On peut réaliser directement la cuisson sans précuisson. Dans ce cas les protéines coagulées peuvent être éliminées en prévoyant un filet à mailles assez grandes pour laisser passer les protéines coagulées, ou en prévoyant une légère agitation du lot de crevettes pour assurer une division des protéines coagulées selon des débris de dimensions inférieures aux mailles du filet.

## Revendications

1. Lot de crevettes (6) **caractérisé en ce qu'**il comporte un emballage souple ajouré, ayant un volume utile supérieur au volume des crevettes et suffisant pour permettre un déplacement aisé des crevettes les unes par rapport aux autres lorsque l'emballage souple est mis à plat sur un support rigide.

2. Lot selon la revendication 1, **caractérisé en ce que** l'emballage souple a un volume utile égal au double du volume des crevettes (6).

3. Lot selon la revendication 1, **caractérisé en ce que** l'emballage souple comporte au moins une partie (4) sous forme de filet.

4. Lot selon la revendication 3, **caractérisé en ce que** l'emballage souple est en forme de sac réalisé à partir de deux matières en feuilles associées l'une à l'autre, une des feuilles étant un filet (4) et l'autre feuille étant un film (1) de matière plastique ajouré.

5. Lot selon la revendication 3, **caractérisé en ce que** la partie sous forme de filet (4) a une taille de mailles de un millimètre à quinze millimètres, de préférence six ou sept millimètres.

6. Procédé de réalisation d'étapes de traitement avec traçabilité de crevettes, **caractérisé en ce qu'**il comporte les étapes de réaliser des lots de crevettes en disposant les crevettes (6) formant un lot dans un emballage souple ayant un volume utile supérieur au volume des crevettes, le volume utile étant suffisant pour permettre un déplacement aisé des crevettes les unes par rapport aux autres, de sceller l'emballage souple et d'effectuer successivement les étapes de traitement en disposant le lot de crevettes sur un support rigide de façon que les crevettes soient étalées selon une couche ayant une épaisseur sensiblement constante sans qu'il soit nécessaire de desceller l'emballage souple.

7. Procédé selon la revendication 6, **caractérisé en ce que** les crevettes (6) sont disposées selon une couche ayant une épaisseur comprise entre deux centimètres et dix centimètres, de préférence cinq centimètres.

8. Procédé selon la revendication 6, **caractérisé en ce qu'**il comporte une étape de cuisson au cours de laquelle la graisse produite par les crevettes est éliminée par débordement.

9. Procédé selon la revendication 6, **caractérisé en ce qu'**il comporte une étape de précuisson à une température à laquelle des protéines contenues dans les crevettes peuvent être évacuées sous forme liquide, et une étape de cuisson à une température supérieure à la température de coagulation des protéines.

10. Procédé selon la revendication 9, **caractérisé en ce qu'**il comporte une étape de refroidissement par un liquide après cuisson.
